# EUROPEAN PATENT SPECIFICATION

(11) **EP 4 316 253 B1**
(45) Date of publication and mention of the grant of the patent: **20.05.2026**
(21) Application number: 22779885.7
(22) Date of filing: 09.03.2022
(51) Int. Cl.: A23F 3/16, A23F 3/30

(54) **SOLID COMPOSITION HAVING GREEN LAVER SCENT**
FESTE ZUSAMMENSETZUNG MIT GRÜNEM LAVER-DUFT
COMPOSITION SOLIDE AYANT UNE ODEUR DE LAITUE DE MER

(30) Priority: 31.03.2021 JP 2021060539
(43) Date of publication of application: 07.02.2024
(73) Proprietor: Suntory Holdings Limited, Osaka 530-8203 (JP)
(72) Inventor: OSANAI, Taisuke, Kawasaki-shi, Kanagawa 211-0067 (JP)
(74) Representative: Vossius & Partner Patentanwälte Rechtsanwälte mbB
(86) International application number: PCT/JP2022/010280
(87) International publication number: WO 2022/209662

(56) References cited:
- WO-A1-2020/222296
- JP-A- 2005 143 467
- JP-A- 2016 111 970
- JP-A- H06 296 457
- JP-A- H06 296 457
- FLAIG MARIO ET AL: "Characterisation of the key aroma compounds in agreen tea infusion () by the sensomics approach and their quantitative changes during processing of the tea leaves", EUROPEAN FOOD RESEARCH AND TECHNOLOGY, SPRINGER BERLIN HEIDELBERG, BERLIN/HEIDELBERG, vol. 246, no. 12, 5 August 2020 (2020-08-05), pages 2411 - 2425, XP037295531, ISSN: 1438-2377, [retrieved on 20200805], DOI: 10.1007/S00217-020-03584-Y
- ZHOU RUJUN, CHEN HE-XING, ZHU JIAN-CAI, NIU YUN-WEI: "Research of Aroma Components of Green Tea", THE FOOD INDUSTRY, vol. 36, no. 12, 1 January 2015 (2015-01-01), pages 270 - 274, XP055791299
- OGITA, HIROFUMI: "Investigation of High-quality Matcha Flavor and its Application to Flavor Creation", KORYO, JAPAN PERFUMERY FLAVOURING ASSOCIATION, TOKYO, JP, no. 289, 20 March 2021 (2021-03-20), JP , pages 103 - 107, XP009540141, ISSN: 0368-6558
- "Chemistry, Process Design, and Safety for the Nitration Industry /ACS /Symposium Series", vol. 1303, 13 December 2019, AMERICAN CHEMICAL SOCIETY/OXFORD UNIVERSITY PRESS , US , ISSN: 0097-6156, article KIM YOUNGMOK, KIM MINA K.: "Effects of Different Harvesting Times and Oxidative Fermentation Methods on Phytochemicals, Flavors, and Sensory Properties of Korean Teas", pages: 77 - 95, XP055974000, DOI: 10.1021/bk-2019-1303.ch006

## Description

### TECHNICAL FIELD

The present invention relates to a solid composition, and more particularly to a solid composition that provides green laver aroma.

### BACKGROUND ART

Tea beverages produced from processed tea leaves are widely consumed not only in Japan but also in other countries throughout the world. Some tea beverages are sold in the form of packaged beverages which are beverages sterile packed in packages such as PET bottles or cans, or other tea beverages are sold in the form of tea powders which are made by drying and powdering tea into a powdery form and are intended to be consumed while dissolved in cold or hot water, or the like. Powdery teas that are to be drunk with water or hot water are broadly classified into the following two forms: one being instant teas obtained by drying a liquid tea leaf extract, and the other being powdered teas obtained by pulverizing tea leaves as they are.

With regard to instant teas, various techniques intended to improve tea flavor have been disclosed. For example, the following instant teas have been disclosed: an instant tea obtained by performing extraction of the same tea leaves multiple times repeatedly during the process of preparing a liquid tea leaf extract (PTL 1); and an instant tea characterized in that a caffeine content is reduced by purifying a green tea extract with a mixed solution comprising ethanol and water at a specified ratio (PTL 2). Also disclosed is an instant tea prepared using a monosaccharide or disaccharide such as glucose or maltose for the purpose of preventing a loss of flavor over time (PTL 3). With regard to powdered teas, various techniques intended to improve dispersity or solubility in water have been disclosed -- for example: a powdered tea obtained by dispersing a pulverized product of tea leaves in a liquid vegetable extract and then spray-drying the obtained dispersion (PTL 4); and a powdered tea mainly composed of pulverized tea leaves obtained by pulverizing and atomizing tea leaves in an aqueous solution (PTL 5).

### CITATION LIST

### PATENT LITERATURES

PTL 1: Japanese Unexamined Patent Application Publication No. JP 2013-226111
PTL 2: Japanese Unexamined Patent Application Publication No. JP 2009-72188
PTL 3: Japanese Unexamined Patent Application Publication No. JP 2013-153739
PTL 4: Japanese Unexamined Patent Application Publication No. JP 2010-233559
PTL 5: Japanese Unexamined Patent Application Publication No. JP 2007-289115

Flaig Mario et al., European food Research and Technology (2020) 246: 2411-2425 pertains to the characterisation of the key aroma compounds in a Longjing green tea infusion by the sensomics approach and their quantitative changes during processing of the tea leaves.

WO2020/222296 A1 discloses a beverage having improved taste, containing at least one sulfur compound among dimethyl disulfide, allyl methyl disulfide, methyl cis-propenyl disulfide, dimethyl trisulfide, diallyl disulfide, and methyl allyl trisulfide.

JPH06296457A relates to a method for producing instant powdered tea having excellent solubility and excellent flavor and taste.

### SUMMARY OF INVENTION

### TECHNICAL PROBLEM

Tea beverages, *inter alia* high-grade green tea beverages, have characteristic aromas -- one of those characteristic aromas is called "green laver aroma". While various types of solid tea compositions have been developed and sold, there has been no known solid tea composition that provides excellent aroma, in particular excellent green laver aroma. Therefore, an object of the present invention is to provide a solid composition that provides excellent green laver aroma when added to a medium such as water.

### SOLUTION TO PROBLEM

The present inventors have made intensive studies to achieve the aforementioned object, and as a result found that when the ratio of dimethyl sulfide content to 1-penten-3-one content in a solid composition is adjusted to be within a specified range, the composition can be perceived to have good green laver aroma characteristic of high-grade tea. Based on this finding, the inventors have completed the present invention.

The present invention is directed, but not limited, to the following.
(1) A solid composition comprising dimethyl sulfide and 1-penten-3-one, and having a weight ratio of dimethyl sulfide content to 1-penten-3-one content of not less than 120, wherein the solid composition comprises a *Sencha* tea leaf extract.
(2) The composition as set forth in (1), wherein the composition is a powder composition.
(3) The composition as set forth in (1) or (2), further comprising two or more types of dextrins.
(4) The composition as set forth in (3), further comprising a linear dextrin and a cyclic dextrin.
(5) The composition as set forth in any one of (1) to (4), wherein the composition has a weight ratio of dimethyl sulfide content to 1-penten-3-one content of not less than 150.
(6) The composition as set forth in any one of (1) to (5), further comprising at least one aroma component selected from the group consisting of α-ionone, β-ionone, β-cyclocitral, (z)-3-hexenol, 1-penten-3-ol, hexanal, and nerolidol.
(7) A beverage or food comprising the composition as set forth in any one of (1) to (6).
(8) The beverage or food as set forth in (7), wherein the beverage or food is a beverage.
(9) The beverage or food as set forth in (8), wherein the beverage or food is a tea beverage.

### ADVANTAGEOUS EFFECTS OF INVENTION

According to the present invention, a solid composition, comprising *Sencha* tea leaf extract that provides excellent green laver aroma when added to a medium such as water can be provided. The solid composition of this invention can be made with water or hot water into a tea beverage, and the thus-obtained tea beverage can provide green laver aroma characteristic of high-grade tea at the time of drinking. The solid composition of this invention is extremely lighter in weight than tea beverages and thus is excellent in convenience during transportation.

Also, the solid composition of the present invention can be used as a source material to make foods. In recent years, there has been a tendency toward an increase in the number and types of tea flavored foods. By using the solid composition of this invention, green laver aroma characteristic of high-grade tea can be imparted to, for example, confectionary foods, such as cakes, sponge cakes, candies, cookies, jellies, puddings and chocolates.

### DESCRIPTION OF EMBODIMENTS

Hereunder, the solid composition of the present invention will be described. Unless otherwise specified, the terms "ppm", "ppb" and "wt.%" as used herein refer respectively to ppm, ppb, and wt.% on a weight/weight (w/w) basis.

One embodiment of the present invention is directed to a solid composition comprising dimethyl sulfide and 1-penten-3-one, and having a weight ratio of dimethyl sulfide content to 1-penten-3-one content of not less than 120. By adopting the aforementioned composition profile, the solid composition can exhibit green laver aroma and provide excellent green laver aroma. As referred to herein, the term "green laver aroma" refers to an aroma that combines a faint roasted aroma with a sweet scent and the smell of seashore.

### (Tea leaf extract)

The solid composition of the present invention comprises a *Sencha* tea leaf extract. As referred to herein, the term "tea leaf extract" refers to components extracted from tea leaves. The tea leaves that can be used in the present invention are leaves obtained from plants belonging to the family *Theaceae,* genus *Camella* (*e.g., Camellia sinensis* (L) O. Kuntze). Tea leaves in general can be classified into non-fermented tea leaves, semi-fermented tea leaves, and fermented tea leaves depending on the method of processing. Examples of non-fermented tea leaves include, but are not limited to, green tea leaves, such as *Aracha* (crude tea), *Sencha* (brewed green tea), *Gyokuro* (refined green tea), *Kabuse-cha* (shaded green tea), *Tencha* (non-ground tea leaves used for *Matcha*), *Bancha* (coarse green tea), *Houji-cha* (roasted green tea), *Kamairi-cha* (pot-roasted green tea), *Kukicha* (twig tea), *Bocha* (roasted twig tea), and *Mecha* (bud tea). Examples of semi-fermented tea leaves include, but are not limited to, oolong tea leaves, such as Tieguanyin (*Tekkanon*), Sezhong (*Shikishu*), Huangjin Gui (*Ougonkei*), and Wuyi tea (*Buigan* tea). Examples of fermented tea leaves include, but are not limited to, black tea leaves, such as Darjeeling, Assam, and Sri Lanka. One type of tea leaves may be used alone, or two or more types of tea leaves may be used in a blended form. Any parts of plants, such as leaves and stems, can be used, as appropriate, to make tea without particular limitation as long as they are plant parts from which fragrance components can be extracted. Tea leaves can be used in any shapes, without limitation, such as whole or powdered leaf. The tea leaf extract used in this invention is a *Sencha* tea leaf extract.

The content of said tea leaf extract in the solid composition of the present invention is not particularly limited, and is in the range of, for example, from 30 to 90 wt.%, preferably from 35 to 80 wt.%, more preferably from 40 to 70 wt.%. When the content of a tea leaf extract falls within the aforementioned range, the aroma derived from tea leaves can be fully felt.

### (Dimethyl sulfide and 1-penten-3-one)

The solid composition of the present invention comprises dimethyl sulfide and 1-penten-3-one. Dimethyl sulfide is an organic sulfur compound represented by the structural formula (CH₃)₂S (CAS Registry No.: 75-18-3), and is known as a laver aroma component. 1-Penten-3-one is an organic compound represented by the molecular formula C₅H₈O (CAS Registry No.: 1629-58-9), and is known to smell like rotten onion or to have a foul, pungent odor like that of rubber, a solvent, or a plastic resin.

In the solid composition of the present invention, the weight ratio of dimethyl sulfide content to 1-penten-3-one content (dimethyl sulfide content/1-penten-3-one content) is not less than 120. While, as mentioned above, dimethyl sulfide is known as an aroma component having green laver aroma, the use of dimethyl sulfide alone puts too strong an emphasis on the roasted green laver aroma felt as a top note, so that the excellent green laver aroma of high-grade green tea beverages like *Gyokuro* is difficult to achieve. When dimethyl sulfide is present in combination with 1-penten-3-one at a weight ratio within the aforementioned range, the solid composition can be perceived to have particularly excellent green laver aroma. More specifically, when dimethyl sulfide is present in combination with 1-penten-3-one at a weight ratio within the aforementioned range, the solid composition can be perceived to have sharp green laver aroma.

The weight ratio of dimethyl sulfide content to 1-penten-3-one content in the solid composition of the present invention is preferably not less than 125, not less than 130, not less than 150, not less than 175, not less than 200, not less than 250, or not less than 300. Also, the weight ratio of dimethyl sulfide content to 1-penten-3-one content in the solid composition of this invention is preferably not more than 100000, not more than 70000, not more than 50000, or not more than 30000. Typically, the weight ratio of dimethyl sulfide content to 1-penten-3-one content in the solid composition of this invention is in the range of preferably from 125 to 100000, more preferably from 130 to 70000, still more preferably from 150 to 50000.

The dimethyl sulfide content in the solid composition of the present invention is not particularly limited, and is for example not less than 0.001 ppm, preferably not less than 0.002 ppm, not less than 0.005 ppm, not less than 0.01 ppm, not less than 0.012 ppm, not less than 0.015 ppm, not less than 0.02 ppm, not less than 0.5 ppm, or not less than 1 ppm. When the dimethyl sulfide content falls within the aforementioned range, the solid composition can exhibit green laver aroma. The upper limit of the dimethyl sulfide content in the solid composition of this invention is not particularly limited. For example, the dimethyl sulfide content is not more than 20,000 ppm, preferably not more than 10,000 ppm, not more than 5,000 ppm, not more than 1,000 ppm, not more than 500 ppm, not more than 200 ppm, or not more than 150 ppm. Thus, the dimethyl sulfide content in the solid composition of this invention is typically in the range of from 0.001 ppm to 10000 ppm, preferably from 0.005 ppm to 500 ppm, more preferably from 0.012 ppm to 200 ppm, still more preferably from 0.02 ppm to 150 ppm.

The 1-penten-3-one content in the solid composition of the present invention is not particularly limited, and is for example not more than 1000 ppb, preferably not more than 700 ppb, not more than 500 ppb, not more than 200 ppb, not more than 150 ppb, not more than 100 ppb, or not more than 50 ppb. When 1-penten-3-one is present in combination with dimethyl sulfide in an amount within the aforementioned range, the solid composition of this invention can exhibit excellent green laver aroma.

In the present invention, the contents of dimethyl sulfide and 1-penten-3-one in the solid composition can be measured using gas chromatography (GC). As a GC analysis system, Shimadzu Nexis GC-2030 (produced by Shimadzu Corporation) can be used. To be specific, by using a solution prepared by dissolving the solid composition of this invention in water, the contents of the above aroma components can be measured under the conditions detailed below.

### System:

GC: Shimadzu Nexis GC-2030
MS: Shimadzu GCMS-QP2020NX
HS: Shimadzu AOC-6000
SPME: SPME Arrow 1.10 mm (DVB/C-WR/PDMS)
Column: GL Sciences InertCap 60 m × 0.25 mm i.d., df = 0.25 µm
Temperature conditions: 40°C (kept for 4 min.), then increasing at a rate of 5°C/min. to 240°C
Carrier gas flow rate: Helium, 1.43 mL/min.
Injection method: Split (split ratio 1:9)
Ion source temperature: 200°C

The conditions for measurement samples can be set as detailed later in the Examples section. After the contents of aroma components in a solution are measured, the contents of aroma components in the solid composition can be determined by back calculation from the amount of the solid composition dissolved in water.

### (Dextrin)

The solid composition of the present invention can comprise a dextrin. The term "dextrin" is a generic term for carbohydrates produced by the hydrolysis of starch or glycogen. In this invention, the dextrin can be used as an excipient to form a solid composition. The type of a dextrin used in the solid composition of this invention is not particularly limited, and at least one type, at least two types, at least three types, or at least four types of dextrins can be used, with preferably at least two types, more preferably at least three types, of dextrins being used.

The dextrin content in the solid composition of the present invention is not particularly limited, and the total dextrin content is in the range of, for example, from 10 to 70 wt.%, preferably from 20 to 65 wt.%, more preferably from 30 to 60 wt.%. In this invention, a commercially available dextrin product can be used. The dextrin content in the solid composition can be measured by sugar analysis using a method known to skilled artisans.

The type of a dextrin used in the present invention is not particularly limited, and examples thereof include, but are not limited, a linear dextrin, a cyclic dextrin, and a spiral dextrin. As referred to herein, the term "linear dextrin" refers to a dextrin that is composed of glucoses linked in a straight chain form or in the form of chains with branches and which does not form a ring structure or a spiral structure. Also, as referred to herein, the term "cyclic dextrin" refers to a dextrin that is composed of glucoses linked to form a cyclic structure and which does not form a spiral structure. As referred to herein, the term "spiral dextrin" refers to a dextrin composed of glucoses linked to form a spiral structure. The solid composition of this invention preferably comprises a linear dextrin and a cyclic dextrin.

The type of the linear dextrin is not particularly limited, and examples thereof that can be used include linear dextrins with a DE (dextrose equivalent) of from 1 to 25, and linear dextrins with a weight average molecular weight of from 500 to 160,000. In the present invention, one type of linear dextrin may be used alone, or two or more types thereof may be used in combination. In a preferred embodiment of this invention, two types of linear dextrins are used. For example, in the case of using two types of linear dextrins, a combination of a linear dextrin with a DE of from 2 to 5 and a linear dextrin with a DE of from 16 to 20, or a combination of a linear dextrin with a weight average molecular weight of from 90,000 to 140,000 and a linear dextrin with a weight average molecular weight of from 600 to 1,200, can be used.

In the case of using a linear dextrin(s), the content of the linear dextrin(s) in the solid composition of the present invention is in the range of, for example, from 0 to 65 wt.%, preferably from 10 to 60 wt.%, more preferably from 15 to 55 wt.%. When the two types of linear dextrins to be used are a linear dextrin with a DE of from 2 to 5 and a linear dextrin with a DE of from 16 to 20, the content of the linear dextrin with a DE of from 2 to 5 in the solid composition of this invention is in the range of, for example, from 0 to 60 wt.%, preferably from 5 to 50 wt.%, more preferably from 10 to 45 wt.%, and the content of the linear dextrin with a DE of from 16 to 20 in the solid composition of this invention is in the range of, for example, from 0 to 60 wt.%, preferably from 5 to 50 wt.%, more preferably from 10 to 45 wt.%. The ratio (weight ratio) of the content of the linear dextrin with a DE of from 2 to 5 to that of the linear dextrin with a DE of from 16 to 20 is in the range of, for example, from 4:0.5 to 0.5:5, preferably from 3:1 to 1:5, more preferably from 2:1 to 1:4.

When the two types of linear dextrins to be used are a linear dextrin with a weight average molecular weight of from 90,000 to 140,000 and a linear dextrin with a weight average molecular weight of from 600 to 1,200, the content of the linear dextrin with a weight average molecular weight of from 90,000 to 140,000 in the solid composition of the present invention is in the range of, for example, from 0 to 65 wt.%, preferably from 10 to 60 wt.%, more preferably from 15 to 55 wt.%, and the content of the linear dextrin with a weight average molecular weight of from 600 to 1,200 is in the range of, for example, from 5 to 60 wt.%, preferably from 5 to 50 wt.%, more preferably from 10 to 45 wt.%. The ratio (weight ratio) of the content of the linear dextrin with a weight average molecular weight of from 90,000 to 140,000 to that of the linear dextrin with a weight average molecular weight of from 600 to 1,200 is in the range of, for example, from 5:1 to 1:3, preferably from 3:1 to 1:2, more preferably from 2:1 to 1:1.

Examples of the cyclic dextrin that can be used include cyclodextrins. In the present invention, α-cyclodextrin, β-cyclodextrin, and γ-cyclodextrin can all be used, with α-cyclodextrin being preferably used. The weight average molecular weight of the cyclic dextrin used in this invention is not particularly limited, and is in the range of, for example, from 700 to 1,300, preferably from 800 to 1,200, more preferably from 900 to 1,100. In the case of using a cyclic dextrin, the content of the cyclic dextrin in the solid composition of this invention is in the range of, for example, from 0.5 to 15 wt.%, preferably from 1 to 12 wt.%, more preferably from 3 to 10 wt.%.

In the case of using a linear dextrin and a cyclic dextrin in combination, the ratio (weight ratio) of the content of the linear dextrin to that of the cyclic dextrin is in the range of, for example, from 20:1 to 2:1, preferably from 15:1 to 3:1, more preferably from 12:1 to 5:1.

The solid composition of the present invention may comprise a spiral dextrin. The DE value of the spiral dextrin used in this invention is not particularly limited and is, for example, less than 7, preferably less than 6, more preferably less than 5. In the case of using a spiral dextrin, the content of the spiral dextrin in the solid composition of the present invention is in the range of, for example, from 0 to 45 wt.%, preferably from 5 to 30 wt.%, more preferably from 10 to 20 wt.%. Further, in the case of using a spiral dextrin, the ratio (weight ratio) of the content of a linear dextrin to that of a spiral dextrin is in the range of, for example, from 1:3 to 3:1, preferably from 1:2 to 2:1, more preferably from 1:1.5 to 1.5:1.

### (Other aroma components)

The solid composition of the present invention can further comprise, in addition to dimethyl sulfide and 1-penten-3-one as mentioned above, at least one aroma component selected from the group consisting of α-ionone, β-ionone, β-cyclocitral, (z)-3-hexenol, 1-penten-3-ol, hexanal, and nerolidol. When such aroma components are incorporated in the solid composition of this invention, the solid composition can exhibit a more well-balanced aroma of green laver.

The α-ionone content in the solid composition of the present invention is, for example, not more than 10,000 ppb, preferably not more than 5,000 ppb, more preferably not more than 2,000 ppb. The β-ionone content in the solid composition of this invention is, for example, not more than 10,000 ppb, preferably not more than 5,000 ppb, more preferably not more than 2,000 ppb. The β-cyclocitral content in the solid composition of this invention is, for example, not more than 10,000 ppb, preferably not more than 5,000 ppb, more preferably not more than 2,000 ppb. The (z)-3-hexenol content in the solid composition of this invention is in the range of, for example, from 1 to 20,000 ppb, preferably from 2 to 15,000 ppb, more preferably from 3 to 10,000 ppb. The 1-penten-3-ol content in the solid composition of this invention is in the range of, for example, from 10 to 10,000 ppb, preferably from 15 to 8,000 ppb, more preferably from 20 to 7,000 ppb. The hexanal content in the solid composition of this invention is in the range of, for example, from 1 to 10,000 ppb, preferably from 2 to 5,000 ppb, more preferably from 5 to 2,000 ppb. The nerolidol content in the solid composition of this invention is in the range of, for example, from 1 to 10,000 ppb, preferably from 2 to 5,000 ppb, more preferably from 5 to 2,000 ppb.

In the present invention, the contents of α-ionone, β-ionone, β-cyclocitral, (z)-3-hexenol, 1-penten-3-ol, hexanal, and nerolidol in the solid composition can be measured using gas chromatography/mass spectroscopy (GC/MS). To be specific, the contents of the above aroma components can be measured under the conditions detailed below.

### System:

GC: Shimadzu Nexis GC-2030
MS: Shimadzu GCMS-QP2020NX
HS: Shimadzu AOC-6000
SPME: SPME Arrow 1.10 mm (DVB/C-WR/PDMS)
Column: GL Sciences InertCap 60 m × 0.25 mm i.d., df = 0.25 µm
Temperature conditions: 40°C (kept for 4 min.), then increasing at a rate of 5°C/min. to 240°C
Carrier gas flow rate: Helium, 1.43 mL/min.
Injection method: Split (split ratio 1:9)
Ion source temperature: 200°C

The conditions for measurement samples can be set as detailed later in the Examples section.

### (Extract containing dimethyl sulfide and 1-penten-3-one)

In the solid composition of the present invention, dimethyl sulfide and 1-penten-3-one may be used as respective purified products or respective crude purified products, or may be used in the form of an extract containing dimethyl sulfide and 1-penten-3-one. As the extract containing dimethyl sulfide and 1-penten-3-one, a naturally occurring extract can be used, and a vegetable extract or an animal extract can be used. In this invention, a vegetable extract is preferably used, and in particular, a tea leaf extract is more preferably used. Although the type of the extract containing dimethyl sulfide and 1-penten-3-one is not particularly limited, the extract is preferably of a different type from the tea leaf extract described above. In other words, when the aforementioned tea leaf extract is regarded as a first tea leaf extract, the tea leaf extract containing dimethyl sulfide and 1-penten-3-one can be used as a second tea leaf extract different from the first tea leaf extract. Additionally, in this invention, dimethyl sulfide and 1-penten-3-one may be derived from the first tea leaf extract. In this invention, the contents of dimethyl sulfide and 1-penten-3-one, regardless of their origin, mean the amounts of these components contained in the solid composition of this invention.

The tea leaves used as a source material to make a tea leaf extract containing dimethyl sulfide and 1-penten-3-one are preferably non-fermented tea leaves, and specific examples thereof include green tea leaves, such as *Aracha, Sencha, Gyokuro, Kabuse-cha, Tencha, Bancha,* and *Houji-cha.* The tea leaf extract containing dimethyl sulfide and 1-penten-3-one may be an extract from a single type of tea leaves or may be an extract from a blend of two or more types of tea leaves. In this invention, the tea leaf extract containing dimethyl sulfide and 1-penten-3-one is preferably a green tea leaf extract, more preferably an extract from tea leaves grown by shielding the sunlight before picking up, such as *Kabuse-cha, Gyokuro* or *Tencha.* By using tea leaves grown by shielding the sunlight before picking up, such as *Kabuse-cha, Gyokuro* or *Tencha,* not only dimethyl sulfide and 1-penten-3-one but also other aroma components derived from such tea leaves can be contained in the tea leaf extract, which can impart more excellent aroma characteristic of high-grade green tea to the solid composition.

In the case of using a tea leaf extract containing dimethyl sulfide and 1-penten-3-one, the content of the tea leaf extract is not particularly limited, and can be adjusted such that the contents of dimethyl sulfide and 1-penten-3-one in the solid composition of the present invention fall within the aforementioned ranges.

### (Other additives)

The solid composition of the present invention not only comprises the aforementioned components, but also can have added thereto other additives commonly used in beverages and foods, such as antioxidant, preservative, pH adjustor, sweetener, enrichment, thickening stabilizer, emulsifier, dietary fiber, and quality stabilizer, to the extent that such additives do not impair the effects of this invention.

### (Solid composition)

The form of the solid composition of the present invention is not particularly limited, and the solid composition of this invention is preferably in a powder form, or namely a powder composition. In this invention, the powder composition has only to be in the form of powder, including granules. In this invention, the particle size of the powder composition is not particularly limited, and is in the range of, for example, from 0.1 to 500 µm, preferably from 1 to 300 µm, more preferably from 10 to 200 µm.

The solid composition of the present invention can be incorporated in a beverage or food. In other words, this invention can provide a beverage or food comprising the aforementioned solid composition. The solid composition of this invention is preferably incorporated in a liquid to prepare a beverage, and most preferably consumed in the form of a tea beverage prepared by dissolving the solid composition in water, hot water or the like. From this viewpoint, the solid composition of this invention can be provided as an instant tea. As referred to herein, the term "instant tea" refers to a powder beverage prepared by drying and powdering a solution of a liquid tea leaf extract used as a source material. Examples of tea beverages include non-fermented teas (*e.g.,* green tea), semi-fermented teas (*e.g.,* oolong tea), and fermented teas (*e.g.,* black tea). Specific examples thereof include: steamed, non-fermented teas (green teas), such as *Sencha, Bancha, Houji-cha, Gyokuro, Kabuse-cha,* and *Tencha;* non-fermented teas including *Kamairi-cha* such as *Ureshinocha, Aoyagicha,* and different Chinese teas; semi-fermented teas such as *Hoshucha, Tekkanon* tea, and oolong tea; and fermented teas such as black tea, *Awa-bancha,* and puerh tea. The tea beverage in which the solid composition of this invention is used is preferably a green tea. In other words, the solid composition of this invention can be provided as an instant green tea.

When the solid composition of the present invention is incorporated in a liquid such as water or hot water, the content of the solid composition in a solution is not particularly limited, and is in the range of, for example, from 0.01 to 20 wt.%, preferably from 0.05 to 10 wt.%, more preferably from 0.1 to 5.0 wt.%. Also, the content of the solid composition in a solution may be adjusted so as to ensure, for example, that the dimethyl sulfide content in the solution falls within the range of from 1 to 2500 ppb, preferably from 5 to 2000 ppb, more preferably from 10 to 1000 ppb, still more preferably from 20 to 500 ppb, or that the 1-penten-3-one content in the solution falls within the range of from 0.0001 to 30 ppb, preferably from 0.001 to 20 ppb, more preferably from 0.003 to 20 ppb, still more preferably from 0.003 to 14 ppb.

The solid composition of the present invention can also be added to a food. Examples of foods include confectionary foods, such as cakes, sponge cakes, candies, cookies, jellies, puddings, and chocolates, frozen desserts such as ice cream, ice candy, and sherbet; and snacks, regardless of whether they are Japanese or Western confectionaries. Also, the solid composition of this invention can be used in breads or dairy products. When the solid composition of the present invention is added to a food, the amount of the solid composition added can be determined, as appropriate, depending on, for example, the type of the food.

When the solid composition of the present invention is added to a food, the amount of the solid composition added can be determined, as appropriate, depending on, for example, the type of the food. The solid composition of this invention can be added to a food so as to ensure that the content of the solid composition in the food falls within the range of, for example, from 0.01 to 20 wt.%, preferably from 0.05 to 10 wt.%, more preferably from 0.1 to 5.0 wt.%, still more preferably from 0.5 to 5.0 wt.%.

Also, the amount of the solid composition of the present invention added to a food can be determined using the content(s) of dimethyl sulfide and/or 1-penten-3-one as an index. For example, the solid composition of this invention can be added to a food so as to ensure that the dimethyl sulfide content in the food falls within the range of from 1 to 2500 ppb, preferably from 5 to 2000 ppb, more preferably from 10 to 1000 ppb, still more preferably from 20 to 500 ppb. For example, the solid composition of this invention can be added to a food so as to ensure that the 1-penten-3-one content in the food falls within the range of from 0.0001 to 30 ppb, preferably from 0.001 to 20 ppb, more preferably from 0.001 to 20 ppb, still more preferably from 0.003 to 14 ppb.

### (Production method)

The solid composition of the present invention can be produced through the steps of (A) preparing a solution comprising a tea leaf extract, dimethyl sulfide and 1-penten-3-one, and (B) drying the prepared solution. Said solution not only comprises a tea leaf extract, dimethyl sulfide and 1-penten-3-one, but also may contain a dextrin and/or other additives as mentioned above. The amounts of any of these components to be added can be determined, as appropriate, to the extent that such components do not impair the effects of this invention. The order of adding such components is not particularly limited. As a solvent for preparing the solution, water may be used or a liquid tea leaf extract may be used as it is. Although said solution may have a weight ratio of dimethyl sulfide content to 1-penten-3-one content of not less than 120, it is only necessary that the finally produced solid composition should have a weight ratio of dimethyl sulfide content to 1-penten-3-one content of not less than 120.

The solution can be dried using a method conventionally known to skilled artisans. Examples of drying methods include spray-drying, freeze drying, hot-air drying, and vacuum drying, with spray-drying being preferably used in the present invention. The conditions for spray-drying, such as drying temperature and time, are not particularly limited, and can be adjusted as appropriate.

The process of producing the solid composition of the present invention not only comprises the aforementioned steps, but also may comprise a step of concentrating the solution obtained at step (A), a step of heat-treating the solution obtained at step (A), and/or the like. All of these additional steps can be performed using a method conventionally known to skilled artisans.

With regard to dimethyl sulfide and 1-penten-3-one as used at step (A), a tea leaf extract (second tea leaf extract) containing these components as mentioned above may be used. By mixing a first tea leaf extract with the second tea leaf extract, the solution at step (A) can be prepared. The tea leaf extract (second tea leaf extract) containing dimethyl sulfide and 1-penten-3-one can be prepared through taking a step of distilling tea leaves, although the step taken to prepare the second tea leaf extract is not particularly limited to the above one. The tea leaves used as a source material to make the second tea leaf extract are as described above. In this invention, tea leaves grown by shielding the sunlight before picking up, such as *Kabuse-cha, Gyokuro* or *Tencha* can be preferably used as a source material.

Distillation of tea leaves to make a tea leaf extract (second tea leaf extract) containing dimethyl sulfide and 1-penten-3-one is typically performed using a steam distillation method. Steam distillation is a method in which steam is passed through a source material (tea leaves) and aroma components distilled out together with steam are aggregated by cooling. Exemplary modes of steam distillation that can be adopted include atmospheric steam distillation, vacuum steam distillation, and gas-liquid multistage countercurrent contact distillation (spinning cone column). In this invention, atmospheric steam distillation is preferably used. Steam distillation of tea leaves is typically performed by a blow-in type steam distillation method. The blow-in type steam distillation is a method in which steam is brought into direct contact with a source material (tea leaves) placed in a container such as basket, and the steam passed through the source material is collected and cooled to obtain a distillate.

The tea leaf extract (second tea leaf extract) containing dimethyl sulfide and 1-penten-3-one as obtained by a steam distillation method can be further subjected to a concentration step to enhance the concentrations of aroma components. Concentration of the second tea leaf extract is typically performed by a distillative concentration method. The distillative concentration can be performed by, for example, employing a procedure in which the tea leaf extract is placed in a still and boiled by heating from the bottom to collect aroma components distilled out together with steam. For the distillative concentration, an atmospheric distillative concentration method or a vacuum distillative concentration method can be employed. In this invention, the vacuum distillative concentration method is preferably employed. Also, an operation called salting-out may be performed at the step of distillative concentration. By performing the salting-out treatment, water molecules can be attracted by the polarity of a salt in a distillate placed in a still, thereby promoting the vaporization of organic compounds. The salting-out treatment can be performed by incorporating a salt such as sodium chloride into a distillate to be concentrated.

The tea leaf extract (second tea leaf extract) containing dimethyl sulfide and 1-penten-3-one may be produced by taking a further step of treatment with activated carbon. By performing activated carbon treatment, the amounts of unwanted aroma components can be reduced. As referred to herein, the term "activated carbon" refers to a porous, carbon-based substance produced through activation of carbon-containing materials such as wood at high temperatures.

### (Method for enhancing the green laver aroma of a beverage or food)

The solid composition of the present invention as obtained in the aforementioned manner can be added to a beverage or food, so that the green laver aroma of the beverage or food can be enhanced. For this reason, in another embodiment, this invention can be directed to a method for enhancing the green laver aroma of a beverage or food, the method comprising a step of adding the solid composition obtained through the aforementioned steps to the beverage or food.

### EXAMPLES

Hereunder, the present invention will be described by way of working examples, but this invention is not limited to these examples.

### 1. Preparation of solid compositions (powder compositions)

### (1-1) Liquid tea leaf extract

A tea extraction tank was charged with commercial *Sencha* tea leaves, and also with a dextrin (20 wt. parts per 100 wt. parts of *Sencha*), tannase (11.2 wt. parts per 100 wt. parts of *Sencha*), L-ascorbic acid (3 wt. parts per 100 wt. parts of *Sencha)* and sodium bicarbonate (1.2 wt. parts per 100 wt. parts of *Sencha*), and then further charged with hot water in an amount equal to 15 times the amount of *Sencha* charged (15 L per kg of *Sencha*), and the mixture was held at 45°C for 20 minutes to prepare a liquid tea leaf extract. The dextrin used was a mixture of a linear dextrin (weight average molecular weight: 120000; DE: 2 to 5) and α-cyclodextrin at a weight ratio of 4:1. The prepared liquid tea leaf extract was subjected to solid-liquid separation (to remove residues of tea leaf extraction), and then mixed with a dextrin (linear dextrin) added in an amount of 4.1 wt. parts per 100 wt. parts of the liquid tea leaf extract, and the mixture was heat-treated under the conditions of 90°C for 30 seconds. After removal of insolubles (tea leaves), the liquid tea leaf extract was concentrated by membrane concentration using a reverse osmosis membrane, to thereby prepare a liquid tea leaf extract having a Brix value, *i.e.* solids concentration in solution, of 26.5.

### (1-2) Tea leaf distillate

Separately from the aforementioned process, a distillate was prepared from tea leaves. To be specific, commercial *Kabuse-cha* tea leaves were mixed with an equal amount of water (1 kg of water per kg of tea leaves) to moisten the tea leaves. Next, the tea leaves were placed in a steam still, and blow-in type steam distillation was performed under the following conditions: the steam pressure was set to 0.20 MPa; the steam flow rate was set to a value sufficient to collect a distillate (aroma) in an amount of about 60 wt.% based on the weight of the source materials in about 30 minutes; and the steam temperature was set to about 100°C (at atmospheric pressure). The steam was condensed such that the temperature of the distillate (aroma) fell below 20°C. The time of distillate collection was set to about 30 minutes after the distillate started to distill out. The same operation was repeated to obtain the distillate in an amount of about 60 wt.% based on the weight of the source materials.

Further, the obtained distillate was placed in a still, and the interior of the still was depressurized to -0.089 MPa using a vacuum pump. The depressurized still was indirectly heated at a steam pressure of 0.20 MPa to raise the temperature of the distillate to 60°C. A distillate was collected by condensing the steam such that the temperature of the distillate (aroma) fell below 20°C. The distillate was collected over about 160 minutes after the distillate stated to distill out. The amount of distillate obtained was about 10 wt.% based on the amount of the distillate (aroma) charged to the still. This operation was repeated four times to concentrate the distillate (aroma) about 10-fold. The thus-obtained distillate was used as a tea leaf distillate.

### (1-3) Powder composition

The liquid tea leaf extract obtained in (1-1) was mixed with the tea leaf distillate obtained in (1-2) (1.5 wt. parts of the tea leaf distillate per 100 wt. parts of the liquid tea leaf extract), and then the mixed solution was heat-treated under the conditions of 90°C for 45 seconds. The heat-treated solution was spray-dried using a spray dryer to prepare a powder composition.

### (1-4) Evaluation of powder compositions

When the above obtained powder composition was dissolved in water, the solution was perceived to have excellent green laver aroma. As a result of analyzing this powder composition, different aroma components were detected, such as dimethyl sulfide, 1-penten-3-one, α-ionone, β-ionone, β-cyclocitral, nerolidol, hexanal, 1-penten-3-ol, and (z)-3-hexenol. With the presence of dimethyl sulfide and 1-penten-3-one being particularly focused among those aroma components, the concentrations of these two components in this powder composition were measured by following the procedure described below.

### <Calibration curve>

Standard stock solutions (in ethanol solvent) were prepared so as to ensure that each of the aroma components of interest was present at a concentration of 1000 ppm. Each stock solution was diluted with pure water to concentrations of 0.004, 0.02, 0.05, 0.1, 0.2, and 0.5 ppm. 10 mL each of the prepared solutions was transferred into a 20 mL glass vial containing 3 g of sodium chloride, and the thus obtained samples were used for calibration curve plotting.

### <Preparation of an analysis sample>

The powder composition was dissolved in pure water, as appropriate, to give a concentration that fell within the concentration range of the calibration curve, and 10 mL of the diluted solution and 3 g of sodium chloride were placed in a 20 mL glass vial to thereby prepare an analysis sample.

### <Component analysis>

The concentrations of the different aroma components were measured using a gas chromatographic analysis system (Shimadzu Nexis GC-2030 (produced by Shimadzu Corporation)).

### System:

GC: Shimadzu Nexis GC-2030
MS: Shimadzu GCMS-QP2020NX
HS: Shimadzu AOC-6000
SPME: SPME Arrow 1.10 mm (DVB/C-WR/PDMS)
Column: GL Sciences InertCap 60 m × 0.25 mm i.d., df = 0.25 µm
Temperature conditions: 40°C (kept for 4 min.), then increasing at a rate of 5°C/min. to 240°C
Carrier gas flow rate: Helium, 1.43 mL/min.
Injection method: Split (split ratio 1:9)
Ion source temperature: 200°C

As a result of the above measurement, the concentrations of dimethyl sulfide and 1-penten-3-one in the analysis sample were found to be 10.4 ppb and 0.08 ppb, respectively.

### 2. Study on the ratio of aroma components (1)

Based on the measurement results given above, a focus was placed on the content ratio of dimethyl sulfide and 1-penten-3-one, and in particular, a study was made on the weight ratio of dimethyl sulfide content to 1-penten-3-one content (dimethyl sulfide/1-penten-3-one).

First, a base powdered tea was prepared. To be specific, a tea extraction tank was charged with commercial *Sencha* tea leaves, and also with a dextrin (20 wt. parts per 100 wt. parts of *Sencha*), tannase (11.2 wt. parts per 100 wt. parts of *Sencha*), L-ascorbic acid (3 wt. parts per 100 wt. parts of *Sencha*) and sodium bicarbonate (1.2 wt. parts per 100 wt. parts of *Sencha*), and then further charged with hot water in an amount equal to 15 times the amount of *Sencha* charged (15 L per kg of *Sencha*), and the mixture was held at 45°C for 20 minutes to prepare a liquid tea leaf extract. The dextrin used was a mixture of a linear dextrin (weight average molecular weight: 120000; DE: 2 to 5) and α-cyclodextrin at a weight ratio of 4:1. The prepared liquid tea leaf extract was subjected to solid-liquid separation (to remove residues of tea leaf extraction), and then mixed with a dextrin (linear dextrin) added in an amount of 4.1 wt. parts per 100 wt. parts of the liquid tea leaf extract, and the mixture was heat-treated under the conditions of 90°C for 30 seconds. After removal of insolubles (tea leaves), the liquid tea leaf extract was concentrated by membrane concentration using a reverse osmosis membrane, to thereby prepare a liquid tea leaf extract having a Brix value, *i.e.* solids concentration in solution, of 25.6. Finally, the obtained liquid tea leaf extract was heat-treated under the conditions of 90°C for 45 seconds to thereby prepare a liquid tea leaf extract. The heat-treated liquid tea leaf extract was spray-dried to obtain a base powdered tea (powder).

Next, 1 g of the above obtained powdered tea was added to 100 mL of water to prepare a powdered tea solution. To the powdered tea solution, dimethyl sulfide and 1-penten-3-one reference standards were added to give different final concentrations as indicated in the table given below, whereby different concentrations of samples were prepared. Since the aroma component concentrations in the different reference standards were unknown, concentration measurements of the reference standards had been done by gas chromatography in advance. To be specific, the dimethyl sulfide and 1-penten-3-one reference standards were diluted with 50 to 5000 times their weights of pure water to adjust their concentrations, as appropriate, to lie within the ranges of the calibration curves, whereby samples for concentration measurement were prepared. The gas chromatographic analysis was done by following the same procedure as described above. Additionally, the dimethyl sulfide and 1-penten-3-one concentrations in the powdered tea *per se* before addition of the reference standards were 840 ppb and 0 ppb (below the limit of detection), respectively.

The different samples prepared using the reference standards were subjected to sensory evaluation by two panelists who were well trained in aroma evaluation. In this sensory evaluation, the extent of green laver aroma perceived from the samples, gassy odor and steamy sensation, and the favorableness of green laver aroma perceived from the samples were rated according to the rating scales detailed below, and the ratings given by the panelists were averaged. As referred to above, the term "steamy sensation" refers to a heating sensation which obscures aroma profiles. Additionally, the rating was done with a sample prepared by adding a dimethyl sulfide reference standard alone to a powdered tea solution to adjust the dimethyl sulfide concentration to 20 ppb being used as a control.

### <Extent of green laver aroma>

1 point: No green laver aroma is perceived.
2 points: A slight green laver aroma is perceived.
3 points: A green laver aroma is perceived.

### <Gassy odor and steamy sensation>

1 point: No gassy odor or steamy sensation is perceived.
2 points: Slight gassy odor and steamy sensation are perceived.
3 points: Gassy odor and steamy sensation are perceived.

### <Favorableness of green laver aroma>

1 point: Unfavorable.
2 points: Somewhat favorable (somewhat excellent in green laver aroma).
3 points: Favorable (excellent in green laver aroma).

**[Table 1]**

| | Dimethyl sulfide [ppb] | 1-Penten-3-one [ppb] | Dimethyl sulfide/ 1-penten-3-one | Rating | | |
|---|---|---|---|---|---|---|
| | | | | Green laver aroma | Gassy odor/ steamy sensation | Favorableness |
| Sample 1-1 | 20 | 0.05 | 400 | 3 | 1 | 3 |
| Sample 1-2 | 20 | 0.08 | 250 | 2.5 | 1 | 3 |
| Sample 1-3 | 20 | 0.13 | 160 | 2.5 | 1 | 2.5 |
| Sample 1-4 | 20 | 0.16 | 125 | 2.5 | 2 | 2 |
| Sample 1-5 | 20 | 0.20 | 100 | 2.5 | 2.5 | 1.5 |
| Sample 1-6 | 20 | 0.50 | 40 | 2 | 3.5 | 1 |
| Sample 1-7 | 10 | 0.05 | 200 | 2 | 1 | 2 |
| Sample 1-8 | 10 | 0.08 | 125 | 2 | 1.5 | 2 |
| Sample 1-9 | 10 | 0.20 | 50 | 2 | 3 | 1 |
| Sample 1-10 | 100 | 0.20 | 500 | 3 | 1 | 3 |
| Sample 1-11 | 100 | 0.50 | 200 | 3 | 2.5 | 2 |
| Sample 1-12 | 100 | 1.00 | 100 | 2 | 4 | 1 |
| Sample 1-13 | 100 | 5.00 | 20 | 1.5 | 5 | 1 |

As shown above, it was demonstrated that when samples contained dimethyl sulfide and 1-penten-3-one, and had a weight ratio of dimethyl sulfide content to 1-penten-3-one content (dimethyl sulfide/1-penten-3-one) within the specified range, the samples were perceived to have excellent green laver aroma.

### 3. Study on the ratio of aroma components (2)

A study was made on the influence of a weight ratio of dimethyl sulfide content to 1-penten-3-one content (dimethyl sulfide/1-penten-3-one) using the powder composition prepared according to the procedure described above in 1.

As a result of the concentration measurement performed according to the procedure described above in 1, the dimethyl sulfide and 1-penten-3-one concentrations in the powder composition *per se* as used in this study were found to be 1500 ppb and 6 ppb, respectively. 1 g of this powder composition was added to 100 mL of water to prepare a solution of the powder composition. To the solution, a 1-penten-3-one reference standard was added to give different final concentrations as indicated in the table given below, whereby different concentrations of samples were prepared. As mentioned above in 1, since the 1-penten-3-one concentration in the reference standard was unknown, concentration measurement of the reference standard had been done by gas chromatography in advance. To be specific, the 1-penten-3-one reference standard was diluted with 50 to 5000 times its weight of pure water to adjust its concentration, as appropriate, to lie within the range of the calibration curve, whereby a sample for concentration measurement was prepared. The gas chromatographic analysis was done by following the same procedure as described above.

The different samples prepared using the reference standard were subjected to sensory evaluation by two panelists who were well trained in aroma evaluation, according to the evaluation procedure and rating scales described above in 2. The results are shown in the table given below.

**[Table 2]**

| | Dimethyl sulfide [ppb] | 1-Penten-3-one [ppb] | Dimethyl sulfide/ 1-penten-3-one | Rating | | |
|---|---|---|---|---|---|---|
| | | | | Green laver aroma | Gassy odor/ steamy sensation | Favorableness |
| Sample 2-1 | 15 | 0.06 | 250 | 3 | 1 | 3 |
| Sample 2-2 | 15 | 0.08 | 188 | 3 | 1 | 3 |
| Sample 2-3 | 15 | 0.10 | 150 | 3 | 1 | 3 |
| Sample 2-4 | 15 | 0.50 | 30 | 1 | 3 | 1 |

As shown above, it was demonstrated that when samples contained dimethyl sulfide and 1-penten-3-one, and had a weight ratio of dimethyl sulfide content to 1-penten-3-one content (dimethyl sulfide/1-penten-3-one) within the specified range, the samples were perceived to have excellent green laver aroma. Since the powder composition samples used contained other aroma components in addition to the two components mentioned above, it was suggested that the presence of such other aroma components contributed to the improvement of green laver aroma.

## Claims

1. A solid composition comprising dimethyl sulfide and 1-penten-3-one, and having a weight ratio of dimethyl sulfide content to 1-penten-3-one content of not less than 120.

2. The composition according to claim 1, wherein the composition is a powder composition.

3. The composition according to claim 1 or 2, further comprising two or more types of dextrins.

4. The composition according to claim 3, further comprising a linear dextrin and a cyclic dextrin.

5. The composition according to any one of claims 1 to 4, wherein the composition has a weight ratio of dimethyl sulfide content to 1-penten-3-one content of not less than 150.

6. The composition according to any one of claims 1 to 5, further comprising at least one aroma component selected from the group consisting of α-ionone, β-ionone, β-cyclocitral, (z)-3-hexenol, 1-penten-3-ol, hexanal, and nerolidol.

7. The composition according to any one of claims 1 to 6, further comprising a tea leaf extract.

8. The composition according to any one of claims 1 to 7, wherein the tea leaf extract is a *Sencha* tea leaf extract.

9. A beverage or food comprising the composition according to any one of claims 1 to 8.

10. The beverage or food according to claim 9, wherein the beverage or food is a beverage.

11. The beverage or food according to claim 10, wherein the beverage or food is a tea beverage.

## Patentansprüche

1. Eine feste Zusammensetzung, die Dimethylsulfid und 1-Penten-3-on umfasst und ein Gewichtsverhältnis von Dimethylsulfid-Gehalt zu 1-Penten-3-on-Gehalt von nicht weniger als 120 aufweist.

2. Die Zusammensetzung nach Anspruch 1, wobei die Zusammensetzung eine Pulverzusammensetzung ist.

3. Die Zusammensetzung nach Anspruch 1 oder 2, ferner umfassend zwei oder mehr Arten von Dextrinen.

4. Die Zusammensetzung nach Anspruch 3, ferner umfassend ein lineares Dextrin und ein cyclisches Dextrin.

5. Die Zusammensetzung nach einem der Ansprüche 1 bis 4, wobei die Zusammensetzung ein Gewichtsverhältnis von Dimethylsulfid-Gehalt zu 1-Penten-3-on-Gehalt von nicht weniger als 150 aufweist.

6. Die Zusammensetzung nach einem der Ansprüche 1 bis 5, ferner umfassend mindestens eine Aromakomponente, ausgewählt aus der Gruppe bestehend aus α-Jonon, β-Jonon, β-Cyclocitral, (z)-3-Hexenol, 1-Penten-3-ol, Hexanal und Nerolidol.

7. Die Zusammensetzung nach einem der Ansprüche 1 bis 6, ferner umfassend einen Teeblattextrakt.

8. Die Zusammensetzung nach einem der Ansprüche 1 bis 7, wobei der Teeblattextrakt ein Sencha-Teeblattextrakt ist.

9. Ein Getränk oder Lebensmittel, umfassend die Zusammensetzung nach einem der Ansprüche 1 bis 8.

10. Das Getränk oder Lebensmittel nach Anspruch 9, wobei das Getränk oder Lebensmittel ein Getränk ist.

11. Das Getränk oder Lebensmittel nach Anspruch 10, wobei das Getränk oder Lebensmittel ein Teegetränk ist.

## Revendications

1. Composition solide comprenant du sulfure de diméthyl et de la 1-pentén-3-one, et ayant un rapport en poids de la teneur en sulfure de diméthyle à la teneur en 1-pentén-3-one non inférieur à 120.

2. Composition selon la revendication 1, laquelle composition est une poudre.

3. Composition selon la revendication 1 ou 2, comprenant en outre deux types ou plus de dextrines.

4. Composition selon la revendication 3, comprenant en outre une dextrine linéaire et une dextrine cyclique.

5. Composition selon l'une quelconque des revendications 1 à 4, laquelle composition a un rapport en poids de la teneur en sulfure de diméthyle à la teneur en 1-pentén-3-one non inférieur à 150.

6. Composition selon l'une quelconque des revendications 1 à 5, comprenant en outre au moins un composant arôme choisi dans le groupe constitué par l'α-ionone, la β-ionone, le β-cyclocitral, le (z)-3-hexénol, le 1-pentén-3-ol, l'hexanal, et le nérolidol.

7. Composition selon l'une quelconque des revendications 1 à 6, comprenant en outre un extrait de feuilles de thé.

8. Composition selon l'une quelconque des revendications 1 à 7, dans laquelle l'extrait de feuilles de thé est un extrait de feuilles de thé *Sencha.*

9. Boisson ou aliment comprenant la composition de l'une quelconque des revendications 1 à 8.

10. Boisson ou aliment selon la revendication 9, laquelle boisson ou lequel aliment est une boisson.

11. Boisson ou aliment selon la revendication 10, laquelle boisson ou lequel aliment est une boisson de type thé.
